# EUROPEAN PATENT APPLICATION

(11) **EP 1 136 698 A1**
(43) Date of publication of application: **26.09.2001**
(21) Application number: 01302400.5
(22) Date of filing: 15.03.2001
(51) Int. Cl.: F03G 7/06, H02K 7/18

(54) **Temperature difference drive unit, and electric device, timepiece and light electrical appliance having the same**

(30) Priority: 17.03.2000 JP 2000077175; 17.03.2000 JP 2000077176; 23.01.2001 JP 2001014671; 23.01.2001 JP 2001014672
(71) Applicant: SEIKO EPSON CORPORATION, Shinjuku-ku Tokyo (JP)
(72) Inventor: Miyazawa, Kenichi, Suwa-shi, Nagano-ken 392-8502 (JP); Takahashi, Osamu, Suwa-shi, Nagano-ken 392-8502 (JP); Fujimori, Shigeyuki, Suwa-shi, Nagano-ken 392-8502 (JP)
(74) Representative: Sturt, Clifford Mark

(57) **Abstract**

A thermal energy is converted into a mechanical energy by a thermal converter (21) including a phase change material whose phase changes between solid and liquid by a temperature change, so that good thermal conductivity can be secured within a normal operating temperature range since the phase change material of the thermal converter (21) does not become a gas and sufficient mechanical energy can be obtained in decreasing an ambient temperature, thereby enhancing conversion efficiency thereof. Further, since an inside of a case (22) is not required to be at a high pressure, the case (22) can be easily manufactured and a compressing means such as a strong spring is not required, thus reducing a size of whole device (1).

## Description

The present invention relates to a temperature difference drive unit for acquiring mechanical energy using temperature difference in natural environment to generate drive force or electrical power by the mechanical energy, and an electric device, a timepiece and a light electrical appliance having the same.

Conventionally, mechanical timepieces such as wristwatch and pocket watch driven by mechanical energy accumulated in main spring are widely in use. Some mechanical timepieces are a manual-winding type for winding up the main spring by hand.

Since the manual-winding type mechanical timepiece stops when the mechanical energy accumulated in the main spring is completely released, periodic winding operation for winding the main spring is required.

Further, once the manual-winding mechanical timepiece is stopped, since the stopped timepiece does not show accurate time, the main spring has to be wound and the timepiece has to be calibrated, thus causing much trouble in handling.

Accordingly, self-winding watch having a rotatable oscillating weight for automatically winding the main spring has been used.

Since the main spring of the self-winding watch is automatically wound by a user's hand movement, the mechanical energy is always accumulated in the main spring only by attaching the watch to user's hand, so that the self-winding watch keeps moving without stopping.

However, such self-winding watch also stops when being detached from the user's hand, since the mechanical energy stored in the main spring is completely released.

Accordingly, a table clock that obtains drive energy using temperature change in natural environment and is moved by the obtained drive energy has been used.

For instance, a table clock "ATMOS" of Jaeger Lecoultre Co., Ltd. obtains drive energy by the temperature change in natural environment using expansion force of a material. Specifically, a phase change material of which phase changes between gas and liquid in a room temperature is accommodated in an expandable container, so that the main spring is wound up using the volume change of the phase change material caused by temperature change, thereby driving the clock by the mechanical energy accumulated in the main spring.

The phase change material is a material whose phase changes between gas and liquid such as ammonia, carbon dioxide, alcohol and methyl chloride.

Since the main spring of the clock can accumulate mechanical energy capable of continuously driving the clock for approximately seventy-two hours, the mechanical energy can always be kept in the main spring under the presence of the temperature change in an ordinary environment and the clock does not stop, thus allowing semipermanent movement thereof.

Since an electronic device such as electronic timepiece with high accuracy using a quartz oscillator cannot be driven by the above arrangement where the drive energy is obtained by the temperature change, another arrangement is known where a power generator is driven by the drive energy obtained by the temperature change (Japanese Patent Laid-Open Publication No. Hei 10-14265, Japanese Patent Laid-Open Publication No. Hei 6-341371).

In the above, a phase change material of which phase changes between gas and liquid in a room temperature is accommodated in an expandable container as in the aforesaid table clock, where a volume change of the phase change material by the temperature change is converted into a rotary drive force by a rack, so that the power generator is actuated by the rotary drive force. A prime mover such as a motor is driven by the electric power generated by the power generator to obtain the drive force.

In order to convert the volume change of the phase change material into the rotary drive force by the rack, the rack is fixed when the temperature continues to rise or lower. When the temperature change is shifted from one of continuous increase and decrease to the other, the fixed rack is released to expand or contract the phase change material at a stretch, thereby improving efficiency of converting electric power.

By installing wave correction function into the clock, the indication accuracy of time can be maintained.

In the above device using the phase change of gas and liquid, when the phase change material changes to gas, thermal conductivity of the phase change material is significantly lowered, thus deteriorating responsivity against change in ambient temperature, so that time from decrease in ambient temperature to volume reduction of the phase change material can be delayed. Accordingly, the phase change material does not generate a mechanical energy in accordance with temperature difference, thus deteriorating conversion efficiency.

Further, since mixing different types of the phase change materials of whose phase change between gas and liquid results in chemical reaction, the phase change temperature cannot be adjusted by mixing the different types of the phase change material. Therefore, the phase change material is contained in a container having variable volume, where the pressure applied to the phase change material is adjusted by contracting the volume of the container to raise the pressure thereinside in order to set the boiling point (phase change temperature) of the phase change material at a desired temperature.

Accordingly, the aforesaid device requires high air tightness of the container containing the phase change material for avoiding leakage of the high-pressure air to the outside as well as variable volume, thus making production of the container difficult.

Further, since the above container contains the phase change material to be a gas, a substantial amount of volume is required and a compressing means such as a strong spring for compressing the container is required in order to maintain the high pressure inside the container, so that size reduction of the whole device is difficult.

Since the phase change material has prominently large expansion rate in changing the phase thereof between the gas and the liquid, large pressure is caused when the phase change material is evaporated to saturated vapor, thus largely fluctuating the pressure. Further, since a high internal pressure is always applied to the container, mechanical fatigue is likely to be caused to the container, so that a container having sufficient durability is difficult to be manufactured, thus further making the production of the container difficult.

Since a rigid and heavy container is used for securing the durability, the size and weight of the device is increased, so that the size and weight reduction of the whole device is difficult.

In the power generator described in the aforesaid publications, since the fixed rack is released to intermittently generate power when the temperature change is shifted from one of increase and decrease to the other, the power generator is actuated many times when the temperature increase and decrease are repeated again and again within a short period of time.

Since the power cannot be efficiently generated until the power generator reaches a predetermined number of revolution in actuating the power generator, the drive energy is lost when the power generator is actuated many times within a short period of time, thus unable to sufficiently improve electric power conversion efficiency.

Further, since number of revolution of a rotor provided to the power generator is increased and decreased so that the voltage applied to the load of the power generator becomes constant in the aforesaid device using the temperature difference, the rotor cannot be always rotated at a number of revolution with the best power-generating efficiency. Therefore, the power-generating efficiency cannot be so improved 'and, since the available energy relative to the inputted thermal energy is decreased, energy utilization efficiency is likely to be deteriorated.

Since the first conversion for converting the thermal energy by the temperature difference into the mechanical energy, the second conversion from the mechanical energy obtained in the first conversion into the electric energy, and the third conversion from the electric energy obtained in the second conversion into the mechanical energy are sequentially conducted, where a part of energy is lost in the respective total three conversions before obtaining the final mechanical energy, so that the available energy relative to the inputted thermal energy is reduced, thus deteriorating energy utilization efficiency.

Further, since the energy utilization efficiency is inferior, the electric power required for wave correction function is difficult to obtain, so that the wave correction function is difficult to be installed.

An object of the present invention is to provide a temperature difference drive unit having improved electric power conversion efficiency, capable of being produced easily and capable of reducing size thereof, and a electric device, a timepiece and a light electrical appliance having the same.

According to an aspect of the present invention, a temperature difference drive unit has: a power generator driven by a mechanical energy to generate an electric power; and a mechanical energy generator for generating the mechanical energy supplied to the power generator, the mechanical energy generator having a thermal converter including a phase change material whose phase changes from one of solid and liquid to the other to change a volume thereof.

In the present aspect of the invention, the phase change material of the thermal converter does not become a gas having extremely small thermal conductivity even after the phase change.

For instance, the air, ammonia and nitrogen dioxide have thermal conductivity of 0.024, 0.022 and 0.0145 W/(m·K) respectively. On the other hand, water and paraffin as a liquid and solid have thermal conductivity of 0.561 and 0.24 W/(m·K). Accordingly, the thermal conductivity of the material does not become extremely small unless the phase change material is gasified.

Accordingly, since superior thermal conductivity of the thermal converter can be secured within an ordinary operating temperature range and superior responsivity against change in ambient temperature can be obtained, the volume rapidly changes in accordance with temperature fluctuation, so that sufficient mechanical energy can be obtained in decreasing the ambient temperature, thereby improving conversion efficiency.

Further, many of the phase change materials whose phase change between solid and liquid do not chemically react even when different type of materials are mixed. Accordingly, the phase change temperature of the thermal converter can be adjusted by mixing the different phase change material, so that the inside of the container is not necessary to be at high pressure.

Therefore, since high air tightness is not required for the container for containing the thermal converter thereinside, the container can be manufactured easily. Further, since the inside of the container is not necessary to be at high pressure, a compressing means such as a strong spring is not required , thus reducing the size of the whole device.

In the above temperature difference drive unit, the thermal converter may preferably be a mixture of a plurality of the phase change materials whose temperature for causing phase change differ, a mixture ratio of the phase change materials being adjusted so that operating characteristics in accordance with using environment can be obtained.

By using the thermal converter of a mixture of a plurality of phase change material, the thermal converter can be arranged most suitably for temperature fluctuation range and fluctuation speed under the using environment of the temperature drive, thus improving conversion efficiency.

In the above-described temperature difference drive unit, an additive for adjusting a phase change temperature and/or temperature characteristics of the phase change material may preferably be mixed in the thermal converter.

Accordingly, even without highly accurate measurement of the respective phase change material in mixing the plurality of phase change material, the phase change temperature and temperature characteristics of the phase change material can be adjusted by adding the additive, so that the thermal converter most suitable for using environment can be securely obtained by adding the additive as necessary while checking the characteristics of the thermal converter after mixing the phase change materials.

In the above temperature difference drive unit, the phase change material may preferably be wax.

Various wax such as paraffin wax, micro wax and petrolatum may be used.

Since the wax does not chemically react even when different types are mixed, the phase change temperature of the thermal converter can be easily arranged by mixing various type of phase change material having different phase change initiation temperature.

Since the above-described wax has an appropriate lubricity and flexibility, the container containing the thermal converter is not likely to be damaged. Further, since the wax does not chemically react with the material of the container, both the wax itself and the container are not modified.

The phase change material of the thermal converter may preferably be n-paraffin of carbon number from 19 to 70. The thermal converter may be composed of a simple substance of a n-paraffin and a mixture of a plurality of n-paraffin.

By using the thermal converter composed of a mixture of more than one n-paraffin, the characteristics of the phase change temperature can be easily adjusted by mixing phase change material with different carbon number. Further, an additive such as fatty acid like lauric acid, stearic acid, oleic acid and decanoic acid, salt of fatty acid like calcium fatty acid, and alcohol like glycerin can be mixed to adjust the phase change initiation temperature range. Furthermore, the volume change amount relative to a temperature change can be linearly set within the temperature range.

In the above-described temperature difference drive unit, the mechanical energy generator may have a case containing the thermal converter thereinside, the container having an advanceable and retractable drive member driven by a volume change of the thermal converter.

Accordingly, even when the thermal converter is contained in the inside of the container, the drive force generated by the volume change of the thermal converter can be taken to the outside through the drive member advanceable and retractable in accordance with volume change amount of the thermal converter, so that the power generator can be rotated by connecting a rack etc. to the drive member.

In the above temperature difference drive unit, in order to transfer the mechanical energy to the power generator, a gear train combining a plurality of gear wheels to transfer a drive force by the mechanical energy may preferably be provided.

Since the thermal converter generates a large drive force as compared to small volume change in changing the phase thereof from one of solid and liquid to the other, the drive force of the thermal converter can be accelerated by the gear train by transferring the drive energy to the power generator through the gear train, to provide a rotary drive force capable of efficiently generating power.

At this time, the gear train may preferably be set at a speed-increasing ratio for driving the power generator at a number of revolution with a good power-generating efficiency.

By increasing speed by the gear train to be a number of revolution with efficient conversion, even when the volume change of the thermal converter is slow, appropriate speed of the rotary drive force can be transferred to the power generator, so that the volume change of the thermal converter can be always efficiently converted into electric power, thus enhancing efficiency of the power generator.

The temperature difference drive unit may preferably have a mechanical energy accumulator for accumulating the mechanical energy generated by the mechanical energy generator.

Since the drive energy generated by the volume change of the thermal converter is accumulated in the mechanical energy accumulator, the power generator can be continuously driven with the mechanical energy accumulator as a buffer, even when the temperature increase and decrease are repeated within a short period of time so that the drive energy intermittently generates the drive energy.

Accordingly, the loss of drive energy caused by repeated actuation of the power generator within a short period of time can be avoided, thus sufficiently improving electric power conversion efficiency.

In the above temperature difference drive unit, the electric power generated by the power generator may preferably be supplied to the outside, the temperature difference drive unit being a power-generating unit.

By arranging the temperature difference drive unit as a power-generating unit, the temperature difference drive unit can be used as a power supply of various timepiece and light electrical appliance, so that the timepiece and the light electrical appliance can be driven by the electric power obtained by the temperature change in natural environment.

The temperature difference drive unit may further have an elastic body as a mechanical energy accumulator for accumulating the mechanical energy generated by the mechanical energy generator, the elastic body being elastically deformed by a volume change of the thermal converter of the mechanical energy generator, and an elastic body controller for keeping a displacement of the elastic body caused by the mechanical energy generator until the displacement of the elastic body reaches a predetermined value, and for releasing the displacement of the elastic body when the displacement of the elastic body exceeds the predetermined value.

By thus intermittently taking out the drive energy from the mechanical energy accumulator, the power generator can be continuously operated with a great drive energy by accumulating a small drive energy generated by the volume change of the thermal converter within the mechanical energy accumulator, so that a power generator generating higher voltage and greater electric power than a conventional one can be used.

The temperature difference drive unit may have an elastic body as a mechanical energy accumulator for accumulating the mechanical energy generated by the mechanical energy generator, the elastic body being elastically deformed by a volume change of the thermal converter of the mechanical energy generator, and an elastic body release for keeping a displacement of the elastic body caused by the mechanical energy generator, and for manually releasing the displacement of the elastic body.

By providing the elastic body release, the elastic body can be quickly released as necessary to generate electric power, the handling of the temperature difference drive unit can be improved. Further, since the manually operated elastic body release has simple structure, the structure of the temperature difference drive unit is not so complicated and the size of the temperature difference drive unit is not so increased.

The electric power generated by the power generator of the temperature difference drive unit may preferably be supplied to a timepiece for measuring time or a light electrical appliance driven at a low electric power.

Accordingly, since the thermal converter including the phase change material whose phase changes from one of solid and liquid to the other is used, superior conversion efficiency can be obtained. Further, the container for containing the thermal converter may be light and small, so that the weight and size of the timepiece and light electrical appliance having the temperature difference drive unit is not so increased, thus keeping substantially the same weight and size of the conventional arrangement.

Another object of the present invention is to provide a temperature difference drive unit capable of efficiently utilizing the thermal energy by the temperature change and an electric device having the same.

According to another aspect of the present invention, a temperature difference drive unit has: a mechanical energy converter for converting a thermal energy obtained by change in ambient temperature into a mechanical energy;
a mechanical energy accumulator for accumulating the mechanical energy outputted by the mechanical energy converter; a rotor rotated by the mechanical energy; a power generator for generating an electric power by a rotary drive of the rotor; a transfer unit for transferring a drive force by the mechanical energy to the power generator; and a controller operated by the electric power from the power generator, the controller controlling a number of revolution of the rotor of the power generator to a predetermined number of revolution.

In the above aspect of the present invention, since the mechanical energy accumulator works as a buffer even when the amount of the mechanical energy generated by the mechanical energy converter, the number of revolution of the rotor of the power generator does not greatly fluctuate.

By setting the number of revolution with the highest conversion efficiency in arranging the number of revolution of the rotor of the power generator in the controller, the power generator can exert the best conversion efficiency, thus utilizing the thermal energy with superior energy utilization efficiency.

The mechanical energy may preferably have a thermal converter whose volume or form changes in accordance with temperature change to generate mechanical energy by the change.

The thermal converter may either be a phase change material whose volume changes in accordance with the phase change caused by the temperature change or a form change material whose form changes by the temperature change.

For instance, the phase change material may be those causing phase change between gas and liquid and between liquid and solid.

The phase change material whose phase changes between gas and liquid may be ammonia, carbon dioxide and ethylene chloride. The phase change material whose phase changes between liquid and solid may be wax.

On the other hand, the form change material may be bimetal and shape memory alloy.

In order to enhance the efficiency of the temperature difference drive unit, a phase change material that does not change into a gas with extremely small thermal conductivity even after the phase change, i.e. the phase change material whose phase changes between liquid and solid, may preferably be used.

For instance, the air, ammonia and nitrogen dioxide have thermal conductivity of 0.024, 0.022 and 0.0145 W/(m·K) respectively. On the other hand, water and paraffin as a liquid and solid have thermal conductivity of 0.561 and 0.24 W/(m·K). Accordingly, the thermal conductivity of the material does not become extremely small unless the phase change material is gasified.

Accordingly, since superior thermal conductivity of the thermal converter can be secured within an ordinary operating temperature range and superior responsivity against change in ambient temperature can be obtained, the volume rapidly changes in accordance with temperature fluctuation, so that sufficient mechanical energy can be obtained in decreasing the ambient temperature, thereby improving conversion efficiency.

Further, since mixing different types of the phase change materials of whose phase change between gas and liquid results in chemical reaction, the container for containing the phase change material is set at a high pressure and the pressure is adjusted to adjust the phase change temperature. Accordingly, the size of the container for containing the phase change material is increased.

On the other hand, many of the phase change materials whose phase change between solid and liquid do not chemically react even when different type of materials are mixed. Accordingly, the phase change temperature of the thermal converter can be adjusted by mixing the different phase change material, so that the inside of the container is not necessary to be at high pressure.

Therefore, since high air tightness is not required for the container for containing the thermal converter thereinside, the container can be manufactured easily. Further, since the inside of the container is not necessary to be at high pressure, a compressing means such as a strong spring is not required , thus reducing the size of the whole device.

The phase change material may be wax, specifically various wax such as paraffin wax, micro wax and petrolatum.

Since the wax does not chemically react even when different types are mixed, the phase change temperature of the thermal converter can be easily arranged by mixing various type of phase change material having different phase change initiation temperature.

Since the above-described wax has an appropriate lubricity and flexibility, the container containing the thermal converter is not likely to be damaged. Further, since the wax does not chemically react with the material of the container, both the wax itself and the container are not modified.

The phase change material of the thermal converter may preferably be n-paraffin of carbon number from 19 to 70. The thermal converter may be composed of a simple substance of a n-paraffin and a mixture of a plurality of n-paraffin.

By using the thermal converter composed of a mixture of more than one n-paraffin, the characteristics of the phase change temperature can be easily adjusted by mixing phase change material with different carbon number. Further, an additive such as fatty acid like lauric acid, stearic acid, oleic acid and decanoic acid, salt of fatty acid like calcium fatty acid, and alcohol like glycerin can be mixed to adjust the phase change initiation temperature range. Furthermore, the volume change amount relative to a temperature change can be linearly set within the temperature range.

In the above temperature difference drive unit, the mechanical energy accumulator may preferably have an elastic body elastically deformed by the mechanical energy.

By accumulating the mechanical energy to the elastic body, the structure of the mechanical energy accumulator can be simplified and size thereof can be reduced, thus reducing weight and size of the temperature difference drive unit.

In the temperature drive, the number of revolution may preferably be controlled to the predetermined number of revolution by adjusting an electric current flowing to the controller to brake the rotor by an electric magnetic brake.

By braking the rotor with the electric magnetic brake generated by adjusting the electric current flowing to the power generator, energy consumption can be reduced for the braking unlike mechanical brake of the rotor, thus minimizing the energy required for controlling the number of revolution of the rotor, so that the thermal energy can be utilized with a superior energy utilization efficiency.

In the above, the transfer unit may preferably be a gear train combining a plurality of gear wheels, at least one of the gear wheel of the gear train being provided with an index for indicating time.

By using the temperature difference drive unit as a timepiece, semi-permanently driven timepiece without supplying energy from the outside can be achieved.

In the timepiece, the index represents time, where the gear wheel provided with the index may preferably have a position detector for detecting rotation angular position thereof, and where a time corrector for receiving a standard time wave superposing a time information and for correcting the rotation angular position of the index to correct the time represented by the index may preferably be provided.

Accordingly, no time correction is required, so that little maintenance work is necessary, thus materializing a clock suitably installed on a place difficult for maintenance work such as a high clock tower and a street corner with much traffic.

The temperature difference drive unit of the present invention can be applied to various electric device such as, for instance, an electrically controlled mechanical clock. Specifically, by providing a time display rotatably driven by the mechanical energy together with the power generator, a number of revolution of the controller being adjusted by the controller, highly accurate time indication can be obtained by the quartz oscillator and the battery is not required for driving thereof, the consumption of battery as a cause of environmental pollution can be reduced.

Embodiments of the present invention will now be described by way of further example only and with reference to the accompanying drawings, in which:-
Fig. 1 is a general illustration showing an arrangement of a first embodiment of the present invention;
Figs. 2(A) to 2(D) are graphs showing characteristics of a thermal converter of the first embodiment;
Fig. 3 is a general illustration showing an arrangement of a second embodiment of the present invention;
Fig. 4 is an enlarged cross section showing a primary portion of the second embodiment;
Fig. 5 is a general illustration showing an arrangement of a third embodiment of the present invention;
Fig. 6 is a general illustration showing an arrangement of a fourth embodiment of the present invention;
Fig. 7 is an enlarged cross section showing a primary portion of the fourth embodiment;
Figs. 8(A) and 8(B) are plan view showing a main spring as an elastic body of the fourth embodiment;
Fig. 9 is a general illustration showing an arrangement of a fifth embodiment of the present invention;
Fig. 10 is a cross section showing a primary portion of the sixth embodiment of the present invention;
Fig. 11 is a general illustration showing an arrangement of a seventh embodiment of the present invention;
Fig. 12 is a general illustration for explaining movement of a primary portion of the seventh embodiment;
Fig. 13 is a block diagram showing an overall arrangement including electric circuits of the seventh embodiment;
Fig. 14 is a general perspective view showing a modification of the present invention; and
Fig. 15 is a general side view showing another modification of the present invention.

An embodiment of the present invention will be described below with reference to attached drawings.

### [First Embodiment]

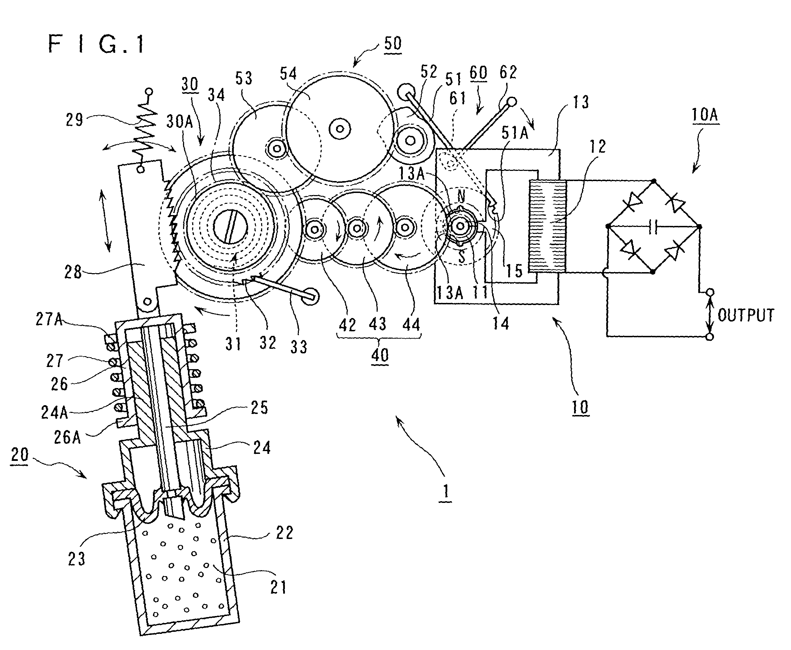

Fig. 1 shows a temperature difference drive unit 1 according to first embodiment of the present invention.

The temperature difference drive unit 1 is a power generating device for supplying electric power to the outside, which includes a power generator 10 as a power generating means driven by a mechanical energy for generating electric power, and a thermoelement 20 as a mechanical energy generating means for generating mechanical energy supplied to the power generator 10.

A barrel gear 30 having a main spring 31 for accumulating the mechanical energy generated by the thermoelement 20, and a gear train 40 as a combination of a plurality of gear wheels 42 to 44 for transferring the drive force by the mechanical energy while accelerating speed thereof are provided between the power generator 10 and the thermoelement 20.

The temperature difference drive unit 1 has an elastic body controller 50 for maintaining displacement of the main spring 31 until the displacement of the main spring 31 elastically deformed by the function of the thermoelement 20 reaches a predetermined amount and for releasing the displacement of the main spring 31 when the displacement of the main spring 31 exceeds a predetermined amount, and a elastic body release 60 for manually releasing the displacement of the main spring 31.

The thermoelement 20 has a thermal converter 21 contained in the case 22, the thermal converter 21 including a phase change material whose phase changes from one of solid and liquid to the other in accordance with change in ambient temperature so that volume thereof changes in accordance with the phase change.

The case 22 is a bottomed cylindrical sealed container having sufficient rigidity, which has a flexible lid 23 for closing an opening of the case 22. The lid 23 is a strong membrane with improved sealability including silicone or Teflon rubber.

A cylindrical cover 24 is fitted to an opening end of the case 22. The lid 23 is held between the cover 24 and the case 22, so that the lid 23 seals the inside of the case 22.

A rod 25 as a drive member to be driven by the volume change of the thermal converter 21 is connected to the lid 23. A cylindrical guide 24A for guiding the rod 25 is provided to the cover 24. Accordingly, a distal end of the rod 25 is advanceable and retractable relative to an end of the guide 24A in accordance with volume change of the thermal converter 21.

A bottomed cylindrical slide 26 is slidably provided on an outer side of the cover 24 along a movement direction of the rod 25. A flange 26A projecting radially outwardly is provided on a peripheral end of an opening of the slide 26. The flange 26A engages to an end of the coil spring 27. The other end of the coil spring 27 engages to a stop 27A of which position is fixed relative to the case 22.

A rack 28 having a sawtooth teeth is pivotably provided on an end of the cover 24. The tooth of the rack 28 engages to a tooth of a ratchet wheel 32 of the barrel gear 30. A tension spring 29 for biasing the rack 28 so that the tooth of the rack 28 and the tooth of the ratchet wheel 32 of the barrel gear 30 mesh with each other in advancing the rod 25 is connected to an end of the rack 28.

The tension spring 29 has a predetermined biasing force for allowing retraction of the rack 28 in retracting the rod 25. Accordingly, the rack 28 retracts in retracting the rod 25, so that the mesh between the tooth of the rack 28 and the tooth of the ratchet wheel 32 are released.

Accordingly, when the thermoelement 21 'expands, the end of the rod 25 advances against the biasing force of the coil spring 27, thus transferring the drive force by the volume change of the thermal converter 21 to the barrel gear 30. On the other hand, when the thermal converter 21 contracts, the end of the rod 25 retracts on account of the biasing force of the coil spring 27 without rotating the ratchet wheel 32.

The phase change material included in the thermal converter 21 is wax. Specifically, n-paraffin of carbon number from 19 to 70 is used.

The thermal converter 21 is a compound of a plurality of n-paraffin having different carbon number and phase change initiation temperature, where mixing ratio thereof is adjusted so that operating characteristics in accordance with the using environment thereof can be obtained.

In the thermal converter 21, additive having melting point different from n-paraffin such as fatty acid like lauric acid, stearic acid, oleic acid and decanoic acid, salt of fatty acid like calcium fatty acid, and alcohol like glycerin is mixed in an appropriate amount.

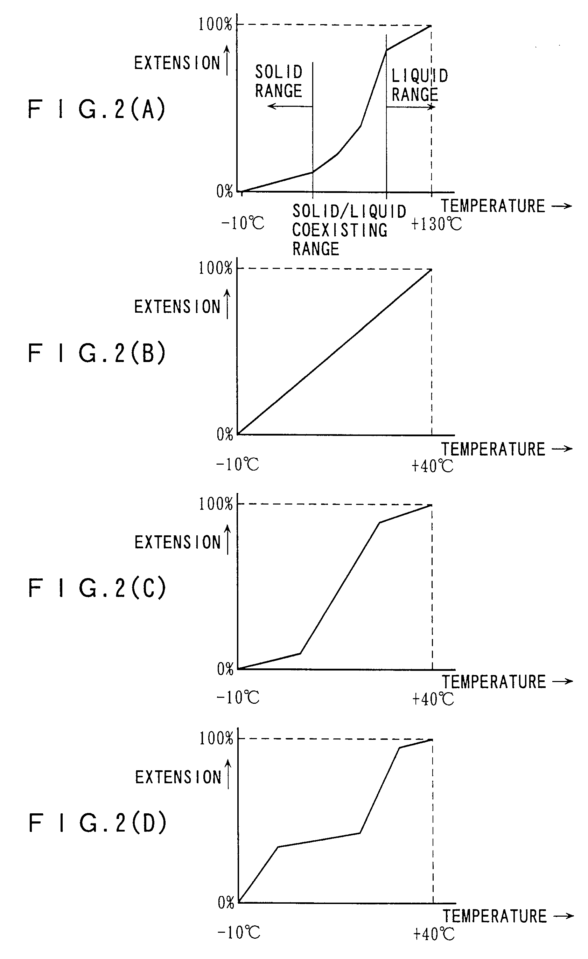

When the thermal converter 21 without the additive is used, the extension of the rod 25 is small at a low-temperature solid range and high-temperature liquid range as shown in Fig 2(A). Though sufficient extension can be obtained at intermediate solid/liquid coexisting range, since the extension lacks linearity, handling thereof is not so good.

Accordingly, lauric acid (melting point 45°C), stearic acid (melting point 55°C), calcium fatty acid (melting point 65°C) and glycerin (melting point 20°C) are mixed therein at an appropriate proportion, thus obtaining thermal converter 21 having linearity of temperature-extension on, for instance, an entire operating temperature range (-10^{~}+40°C) as shown in Fig. 2(B).

Incidentally, by changing mixing ratio of lauric acid, stearic acid, calcium fatty acid and glycerin into the thermal converter 21 as necessary, a thermal converter 21 having relatively narrow operable temperature range but large extension relative to temperature change as shown in Fig. 2(C) and another thermal converter 21 hardly moving the rod against the temperature change at an intermediate range of the operable temperature as shown in Fig. 2(D) can be obtained.

Products of NTC Industrial Co., Ltd. (product number R013) can be used as the thermoelement 20.

Back to Fig. 1, the barrel gear 30 is a mechanical energy accumulator for accumulating the mechanical energy generated by the thermoelement 20, the barrel gear having the main spring as an elastic body to be elastically deformed by the volume change of the thermal converter 21 of the thermoelement 20.

Specifically, the barrel gear 30 is a first wheel and pinion provided on an outer circumference of a cylindrical-box barrel 30A for accommodating the main spring 31, the teeth of the barrel gear 30 meshing with teeth provided to a second pinion of a second wheel and pinion. The main spring 31 accommodated inside the barrel 30A is wound in spiral whose end engages to an inner circumference 30A of the barrel 30A.

The ratchet wheel 32 provided on the barrel gear 30 has sawtooth teeth in accordance with the rack 28 of the thermoelement 20, which engages to an inner end of the main spring 31 wound in spiral through a barrel center (not shown). A plate-spring recoil detent 33 engages to the ratchet wheel 32 so that the coiled main spring 31 is not uncoiled.

A control wheel and pinion 34 to be engaged to the elastic body controller 50 is provided to the barrel 30A coaxially with the barrel gear 30. Incidentally, the control wheel and pinion 34 has a diameter smaller than the barrel gear 30.

The gear train 40 transfers the rotary drive force of the barrel gear 30 to a rotor 11 of the power generator 10 while increasing the speed by three gear wheels, i.e. a second wheel and pinion 42, a third wheel and pinion 43, and a sweep second wheel and pinion 44. A speed-increasing ratio for rotating the rotor 11 of the power generator 10 at a frequency with sufficient power generating efficiency is set to the gear train 40.

The power generator 10 is formed in a C-shape, and has a rotor 11 rotatably provided at a gap of a stator 13 with a coil 12 being wound at an intermediate portion thereof. A rectifier 10A composed of diodes and smoothing capacitor is connected to both ends of the coil 12 of the power generator 10.

The rotor 11 of the power generator 10 is a disk composed of a permanent magnet having a pair of N and S poles. A gear wheel 15 having a pinion 14 engaged to the sweep second wheel and pinion 44 is integrated to the rotor 11 at a coaxial position. The teeth of the gear wheel 15 engages to a pawl 51A formed at a distal end of the brake 51 provided to the elastic body controller 50.

The number of revolution of the rotor 11, dimension of the gap between the rotor 11 and the stator 13, material of the permanent magnet forming the rotor 11, size and winding number of the coil 12 are appropriately set so that the voltage, electric current and electric power required for the load electrically connected to the power generator 10 can be efficiently outputted from the power generator 10.

Incidentally, the alternating voltage outputted by the coil 12 of the power generator 10 is preferably three to five times as large as a direct voltage outputted from the rectifier 10A.

A pair of notch 13A is formed mutually oppositely at an inner circumference of the stator 13 facing the rotor 11. The notch 13A is adjusted to reduce a cogging torque of the rotor 11.

The elastic body controller 50 has a cam 52 for pressing a brake 51 to release braking of the rotor 11, and two gear wheels 53 and 54 for transferring the rotation of the barrel gear 30 to the cam 52. Specifically, the rotation of the control wheel and pinion 34 provided to the barrel 30A is slowed down by the gear wheels 53 and 54 before being transferred to the cam 52.

For instance, when the displacement of the main spring 31 is arranged to reach the predetermined amount when the barrel gear 30 is rotated six times by virtue of the thermoelement 20, speed decreasing ratio of the gear wheels 53 and 54 is set so that the cam 52 rotates once for every six rotations of the barrel gear 30.

Accordingly, the brake 51 stops the rotation of the rotor 11 until the barrel gear 30 rotates six times, thus maintaining the displacement of the main spring 31. On the other hand, when the barrel gear 30 is rotated six times, the cam 52 presses the brake 51 to rotate the rotor 11, thus releasing the displacement of the main spring 31, so that the power generator 10 starts generating power by the drive energy accumulated by the main spring 31.

When the barrel gear 30 is rotated to a position for the drive energy to be completely released, the cam 52 rotates to a position to release the press toward the brake 51. Accordingly, when the main spring 31 completely releases the drive energy, the distal end of the brake 51 returns to the initial position thereof, so that the brake 51 again stops the rotor 11, thus starting accumulating operation of the drive energy to the main spring 31.

The elastic body release 60 has a small-sized cam 61 to be rotated for releasing engagement of the gear wheel 15 of the rotor 11 with the brake 51, and a lever 62 for manually rotating the small-sized cam 61. When the lever 62 is manually operated, the small-sized cam 61 releases the brake of the rotor 11, so that the power generator 10 starts power generating movement by the drive energy stored by the main spring 31.

On the other hand, when the lever 62 is returned to the initial position thereof, the distal end of the brake 51 returns to the initial position thereof, so that the brake 51 again stops the rotor 11, thus starting drive energy accumulation to the main spring 31.

According to the above-described embodiment, following effects can be obtained.

Since the thermal converter 21 whose phase changes from one of solid and liquid to the other is used in generating the mechanical energy from the ambient temperature difference, the thermal converter 21 does not change to gas having prominently small thermal conductivity even after the phase change.

Accordingly, good thermal conductivity can be maintained within a normal operating temperature range, so that the thermoelement 20 having good responsivity against the change in ambient temperature can be obtained. Since the rod 25 rapidly retracts when the ambient temperature is decreased and the rod 25 rapidly advances when the temperature rise again, the mechanical energy can be securely obtained by the temperature difference, thus improving conversion efficiency.

The n-paraffin that does not chemically react with each other even when a plurality of type having different phase change temperature is mixed is used as the phase change material, and the phase change temperature can be adjusted by mixing different type of phase change material, no high pressure is required inside the case. 22.

Accordingly, since the case 22 for accommodating the phase change material thereinside does not necessarily have high air tightness, the case 22 can be easily manufactured. Further, since the inside of the case 22 is not necessarily at high pressure, compressing means such as strong spring is not required, thus reducing the whole size of the temperature difference drive unit 1.

Further, since the thermal converter 21 whose phase changes from one of solid and liquid to the other does not have so large expansion rate as compared to the phase change material changing from liquid to gas, and since no great internal pressure remains inside the case 22 after completely exerting the drive energy, mechanical fatigue is not likely to be generated to the container containing the thermal converter 21 and the lid 23, thus improving durability.

Further, even when the case 22 and the lid 23 are provided with high durability, the size and weight of the case 22 can be reduced, thus reducing weight and size of the whole temperature difference drive unit 1.

Since the thermal converter 21 is a mixture of a plurality of n-paraffin having different carbon number and phase change initiation temperature and the mixing ratio thereof is adjusted so that a operating characteristics in accordance with using environment can be obtained, the thermal converter 21 most suitably set in accordance with fluctuation range and speed of the temperature of the using environment of the temperature difference drive unit 1 can be obtained, thus also improving conversion efficiency.

Since an additive for adjusting the phase change temperature and temperature characteristic of n-paraffin is mixed into the thermal converter 21, the phase temperature and temperature characteristics of the phase change material can be adjusted with high accuracy even without accurately measuring the respective phase change materials in mixing the plurality of phase change materials. Further, the additive can be added while checking characteristics of the thermal converter 21 after mixing the phase change material, the most suitable thermal converter for the using environment can be obtained.

Since the volume of the phase change material can be linearly changed in accordance with temperature within the operating temperature range by adding the additive, regular drive energy in accordance with temperature difference can be generated by using within the operating temperature range.

Since the n-paraffin as a wax having appropriate lubricity and flexibility is used as the phase change material, the thermal converter 21 is not likely to damage the case 22 even after repeated expansion and contraction of the thermal converter 21. Further, since the thermal converter 21 does not chemically react with the material of the case 22, both the thermal converter and the case 22 are not chemically modified.

Since the gear train 40 for transferring the drive force of the thermoelement 20 while increasing speed thereof is provided between the thermoelement 20 and the power generator 10 so that a rotary drive force capable of generating power by the power generator 10 can be obtained even with small volume change of the thermal converter 21, the drive energy of the thermoelement 20 can be directly transferred to the power generator 10 by operating the elastic body release 60 to actuate the power generator 10, and the electric power can be efficiently generated by the power generator 10.

Since the barrel gear 30 has the main spring 31 for accumulating the mechanical energy generated by the thermoelement 20 so that the drive energy by the volume change of the thermal converter 21 is accumulated in the barrel gear 30, even when the thermoelement 20 intermittently generates the drive energy after repeated increase and decrease in temperature within a short time period, the power generator 10 can be continuously driven by virtue of the main spring 31 as a buffer.

Accordingly, the loss of drive energy caused by repeated actuation of the power generator 10 within a short period of time can be avoided, thus sufficiently improving electric power conversion efficiency.

Since the rod 25 driven by the volume change of the thermal converter 21 is advanceably provided, the volume change amount of the thermal converter 21 can be taken to the outside without complicating the structure of the thermoelement 20. Further, since the rack 28 is connected to the rod 25 and the rack 28 is engaged with the barrel gear 30 and the gear train 40, the drive energy can be easily transferred to the power generator 10.

Since the elastic body controller 50 for maintaining the displacement of the main spring 31 until the displacement of the main spring 31 reaches a predetermined value and for releasing the displacement of the main spring 31 when the displacement of the main spring 31 exceeds the predetermined value is provided so that the drive energy is acquired in a mass from the barrel gear 30 having the main spring 31, the small drive energy caused by the minute volume change of the thermal converter 21 can be accumulated to be magnified in the main spring 31, thus continuously driving the power generator 10 with a great drive energy. Accordingly, a power generator 10 driven at higher voltage than a conventional one can be used to generate greater power, thus achieving greater output of the power generator 10.

Since the elastic body release 60 for maintaining the displacement of the main spring 31 accumulating the mechanical energy by the elastic deformation thereof and for releasing the displacement of the main spring 31 by a manual operation is provided, the main spring 31 can be quickly released to generate electric power as necessary, thus improving operability of the temperature difference drive unit 1. Further, since the structure of the elastic body release 60 operated by manual operation can be simplified, the structure of the temperature difference drive unit 1 is not so complicated or size of the temperature difference drive unit 1 is not so increased.

### [Second Embodiment]

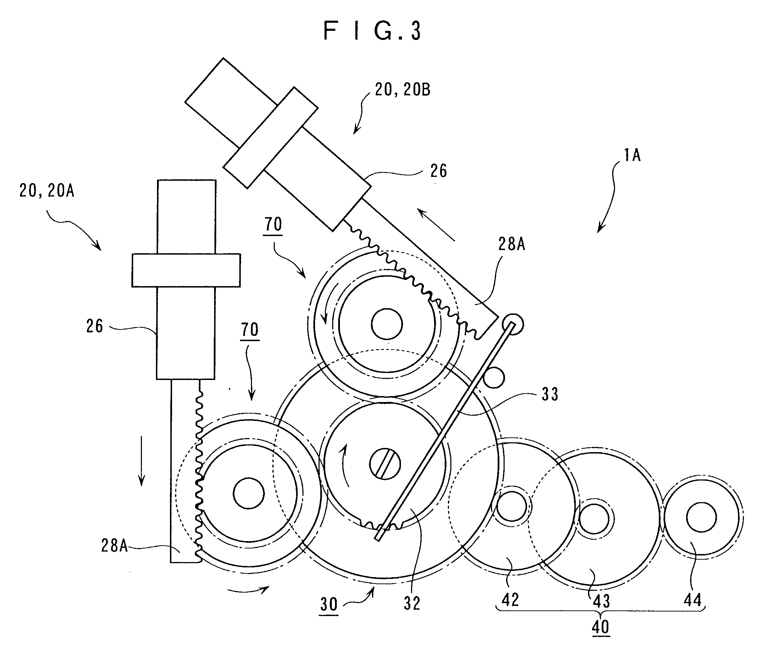

Fig. 3 shows the second embodiment of the present invention. Though the drive energy is obtained from the thermal converter 21 only in increasing the temperature in the above-described first embodiment, the drive energy can be acquired also in decreasing the temperature as well as increasing the temperature in the present embodiment.

Specifically, the temperature difference drive unit 1A has two thermoelements 20. A rack 28A of the thermoelement 20 is fixed orthogonally with an end surface of the slide 26. A tooth of the rack 28 is a laterally symmetrical ordinary tooth of approximately triangle.

A ratchet mechanism 70 for transferring only unidirectional drive force is provided between the thermoelement 20 and the ratchet wheel 32. On account of the ratchet mechanism 70, only a drive force for advancing the rack 28A is transferred to the barrel gear 30 in the thermoelement 20A shown at the lower left in the figure, and only a drive force for retracting the rack 28A is transferred to the barrel gear 30 in the thermoelement 20B shown in upper right in the figure.

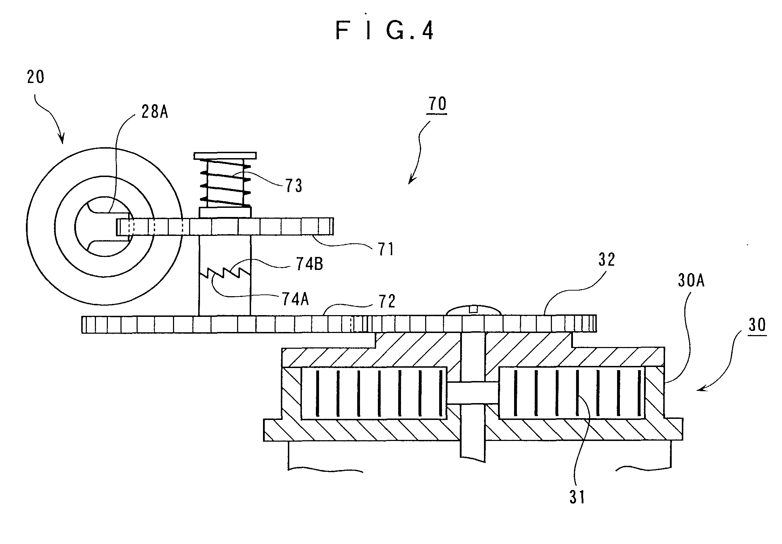

As shown in Fig. 4, the ratchet mechanism 70 has a gear wheel 71 meshing with the rack 28A and a gear wheel 72 meshing with the ratchet wheel 32.

The gear wheels 71 and 72 are biased to move toward each other by a spring 73, which are connected by one-way clutches 74A and 74B having mutually meshing sawtooth teeth.

When a drive force generated by the thermoelement 20 in a direction to be transmitted is transferred to the gear wheel 71, the teeth of the one-way clutch 74A and 74B mesh with each other, so that the drive force is transferred to the ratchet wheel 32 through the gear wheel 72.

On the other hand, when a drive force generated by the thermoelement 20 in a direction not to be transmitted is transferred to the gear wheel 71, the gear wheel 71 retracts against the biasing force of the spring 73 by the slanted sawtooth teeth of the one-way clutches 74A and 74B, so that the meshing between the one-way clutches 74A and 74B is released, thus not transferring the drive force to the ratchet wheel 32.

The same functions and effects as the first embodiment can be obtained in the second embodiment. Further, since the main spring can be wound by both drive forces in expanding and contracting the thermal converter 21 of the thermoelement 20, the drive energy can be acquired not only in increasing temperature but in decreasing temperature, so that the main spring 31 can be wound at a shorter period of time.

### [Third Embodiment]

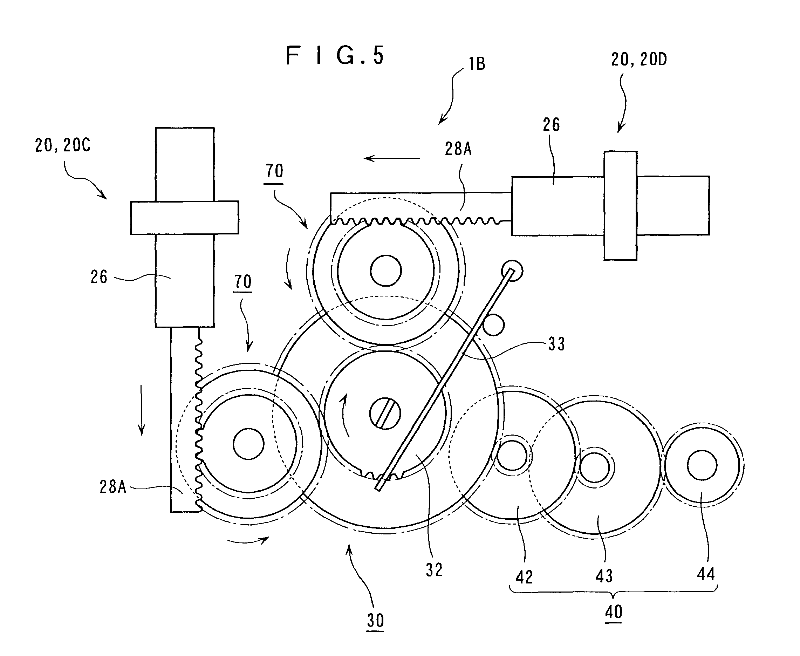

Fig. 5 shows the third embodiment of the present invention. In the present embodiment, the two thermoelements 20 having the same operating temperature range in the second embodiment are substituted by two thermoelements 20C and 20D having different operating temperature ranges.

Specifically, the two thermoelements 20 engage with the ratchet wheel 32 through the ratchet mechanism 70, thus transferring only the drive force for advancing the rack 28A to the barrel gear 30.

In the thermoelements 20, the thermoelement 20D shown in upper right in the figure is operated at a higher temperature than the thermoelement 20C shown in lower left in the figure.

The operating temperature range of the thermoelement 20C is -10 ^{~} +15°C and the operating temperature range of the thermoelement 20D is +15 ^{~} +40°C.

The same functions and effects can be obtained in the third embodiment. Additionally, since the thermoelements 20C and 20D having different operating temperature range are provided, the operating temperature range of the temperature difference drive unit 1B can be shared by the two thermoelements 20C and 20D, so that the operating temperature range of these thermoelements 20C and 20D can be narrowed, thus reducing the size of the thermoelements 20C and 20D, and, the temperature difference drive unit 1B.

### [Fourth Embodiment]

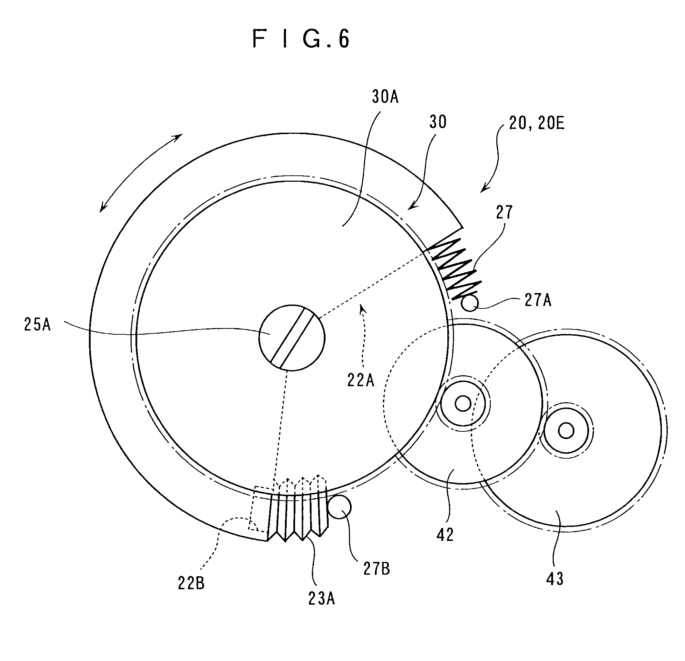

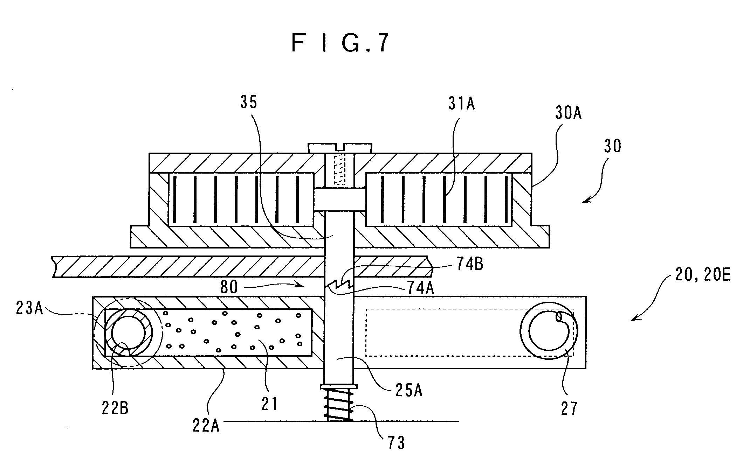

Figs. 6 and 7 show the fourth embodiment of the present invention. Fig. 6 is a top plan view showing the fourth embodiment and the Fig. 7 is a cross section taken along a line including a central axis of the barrel gear shown 'in Fig. 6. In the fourth embodiment, a thermoelement 20E for generating a torque as a drive force is used instead of the thermoelements 20 for generating linear drive force in the first to the third embodiments.

Specifically, the thermoelement 20E has a sector case 22A rotatable coaxially with the barrel gear 30. The case 22A has two radially extending planes. An opening 22B is provided adjacent to outer end of the one of the planes. The opening 22B is shut by an expandable bellows 23A, thus sealing the case 22A.

An inside of the bellows 23A is in communication with the case 22A, the bellows 23A extending in circumferential direction of the case 22A by the expansion of the thermal converter 21 filled in the case 22A and contracts by the contraction of the thermal converter 21.

An end of the bellows 23A engages with a stop 27B fixed relative to a shaft 25A rotatably supporting the case 22A.

An outer peripheral end of the other plane of the case 22A engages with one end of the coil spring 27. The other end of the coil spring 27 engages with a stop 27A fixed relative to the shaft 25A.

When the thermal converter 21 expands, the thermoelement 20E generates a torque in clockwise direction in Fig. 6 by expansion of the bellows 23A against the biasing force of the coil spring 27. On the other hand, when the thermal converter 21 contracts, the bellows 23A contracts to generate a torque in counterclockwise direction in Fig. 6 by the biasing force of the coil spring 27.

The thermoelement 20E and the barrel gear 30 mutually engage through the ratchet mechanism 80, so that only unidirectional torque generated by the thermoelement 20E is transferred to the barrel gear 30.

As shown in Fig. 7, the ratchet mechanism 80 has one-way clutches 74A and 74B respectively provided on an end surface of barrel center 35 for supporting the barrel gear 30 and an end surface of a shaft 25A for supporting the thermoelement 20E.

The one-way clutches 74A and 74B have mutually meshing sawtooth teeth, which are biased into mutual contact by the biasing force of the spring 73 provided on an end of the shaft 25A of the themoelement 20E.

Incidentally, the spring 73 biases not only the shaft 25A but also the thermoelement 20E toward the barrel gear 30.

When the clockwise torque to be transferred is generated by the thermoelement 20E, the teeth of the one-way clutches 74A and 74B mutually mesh, thus transferring the torque to the barrel center 35.

On the other hand, when the counterclockwise torque not to be transferred is generated by the thermoelement 20E, the shaft 25A retracts against the biasing force of the spring 73 by the slanted sawtooth teeth of the one-way clutches 74A and 74B, so that the meshing between the one-way clutches 74A and 74B is released, thus not transferring the torque to the barrel center 35.

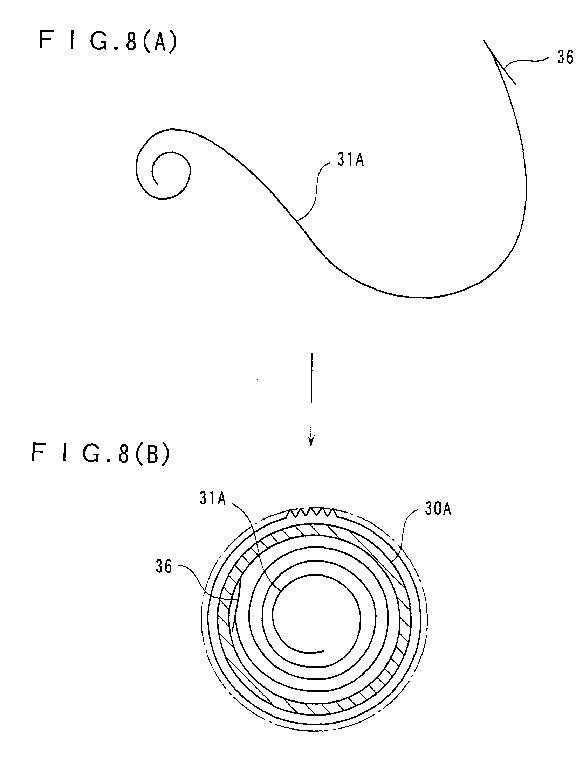

The main spring 31A accommodated inside the barrel 30A is a band-shaped metal having a frictional engagement portion 36 at an end thereof as shown in Fig. 8(A). As shown in Fig. 8(B), the main spring 31A is accommodated in the barrel 30A while being wound from an end opposite to the frictional engagement portion 36, so that the frictional engagement portion 36 engages with an inner side of the barrel 30A.

When the main spring 31A can still be wound, the frictional engagement portion 36 securely engages with the barrel 30A by a frictional force against the inner surface of the barrel 30A. Accordingly, the main spring 31A can be securely wound by the thermoelement 20E until the main spring 31A is completely wound.

On the other hand, when the main spring 31A cannot be further wound and a great torque is applied to the main spring 31A, the frictional force between the frictional engagement portion 36 and the inner side of the barrel 30A yields to the torque, so that the frictional engagement portion slides on an inner circumference of the barrel 30A. Accordingly, when the main spring 31A is completely wound, great torque is not applied to the main spring 31A, thus avoiding damage of the main spring in advance.

The same functions and effects as the first embodiment can be obtained in the fourth embodiment. Further, since the sector thermoelement 20E capable of arranging coaxially with the barrel gear 30 is used to enable compact accommodation and the torque is acquired from the thermoelement 20E without changing the size of the thermoelement 20E even in volume change of the phase change material, the size of the temperature difference drive unit can be further reduced.

### [Fifth Embodiment]

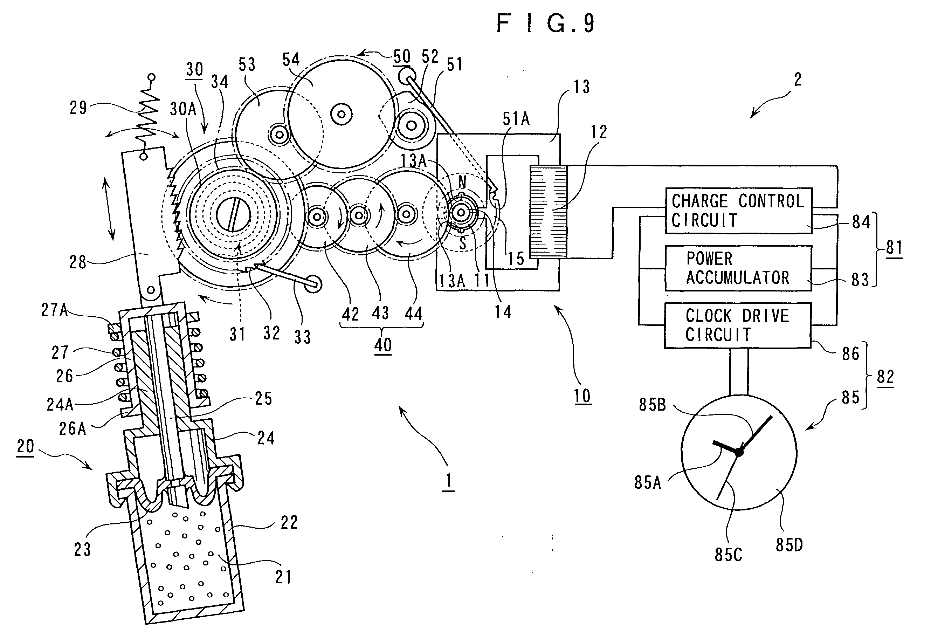

Fig. 9 shows the fifth embodiment of the present invention. In the fifth embodiment, the temperature drive 1 described in the first embodiment is used as a power supply of a wristwatch 2 as a timepiece for measuring time and for displaying the measured time.

Specifically, the wristwatch 2 has the temperature difference drive unit 1, a charging portion 81 for storing the electric power generated by the temperature difference drive unit 1, and a clock portion 82 for displaying the present time. Incidentally, the elastic body release portion 60 is omitted in the temperature difference drive unit of the fifth embodiment.

The charging portion 81 has a power accumulator 83 composed of a capacitor for storing the electric power, and a charge control circuit 84 for controlling electric current flowing through the power accumulator 83 in charging the power accumulator 83 by the electric power from the temperature difference drive unit 1.

The charge control circuit 84 has a rectifier (not shown) for rectifying the alternating current generated by the power generator 10 and an overcharge-avoiding circuit (not shown) for preventing the flow of the electric current into the power accumulator 83 when the power accumulator 83 is completely charged.

The clock portion 82 has a time display 85 for displaying the time by indexes 85A to 85C driven by a pulse motor (not shown) and a clock drive circuit 86 for applying a pulse voltage of a predetermined period.

The time display 85 displays the time by a time hand 85A, a minute hand 85B, second hand 85C and a dial 85D.

The clock drive circuit 86 has an oscillating circuit for oscillating at an always-stable frequency by a quartz oscillator (not shown), the oscillating circuit generating a reference signal to drive the pulse motor of the time display 85.

The same functions and effects as the first embodiment can be obtained in the fifth embodiment. Further, though being a quartz-type wristwatch, no battery change is required and the wristwatch can be semi-permanently driven by the temperature difference after being detached from arm.

### [Sixth Embodiment]

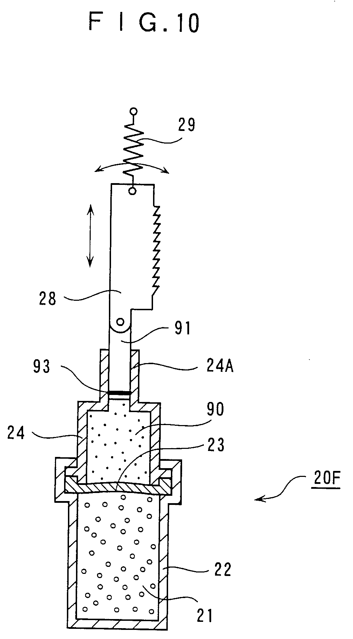

Fig. 10 shows a sixth embodiment of the present invention. In the present embodiment, the thermoelement 20 of the first embodiment having a rod 25 directly driven by the thermal converter 21 is substituted by a thermoelement 20F having a rod 91 indirectly driven by the thermal converter 21 through a semifluid 90.

Specifically, the rod 91 of the thermoelement 20F is not connected to the lid 23, but is reciprocatable by being guided by the guide 24A provided to the cover 24. The guide 24A has a smaller diameter than the case 22.

The semifluid 90 is filled in the space defined by the cover 24 and the lid 23. Accordingly, when the thermal converter 21 expands, the lid 23 expands toward the semifluid 90 to advance the rod 91 through the semifluid 90. On the other hand, when the thermal converter 21 contracts, the lid 23 retracts to the case 22, so that the rod 91 retracts through the semifluid 90.

In the present arrangement, since the inner diameter of the guide 24A is smaller than the inner diameter of the case 22, the displacement of the lid 23 is magnified before being transmitted to the rod 91. Accordingly, in the thermoelement 20F, a displacement greater than the thermoelement 20 can be obtained with the same temperature difference.

Incidentally, an O-ring 93 to be in close contact with the inner circumference of the guide 24A is attached adjacent to an end of the rod 91 on the lid 23 side in order to prevent the semifluid from flowing to the outside.

The same functions and effects as the first embodiment can be obtained in the sixth embodiment. Further, since a greater displacement with the same temperature difference can be applied to the rod 91, the speed increasing ratio of the gear train 40 can be reduced, thus further reducing the size of the temperature difference drive unit 1 by reducing the size of or partially omitting the gear wheel.

### [Seventh Embodiment]

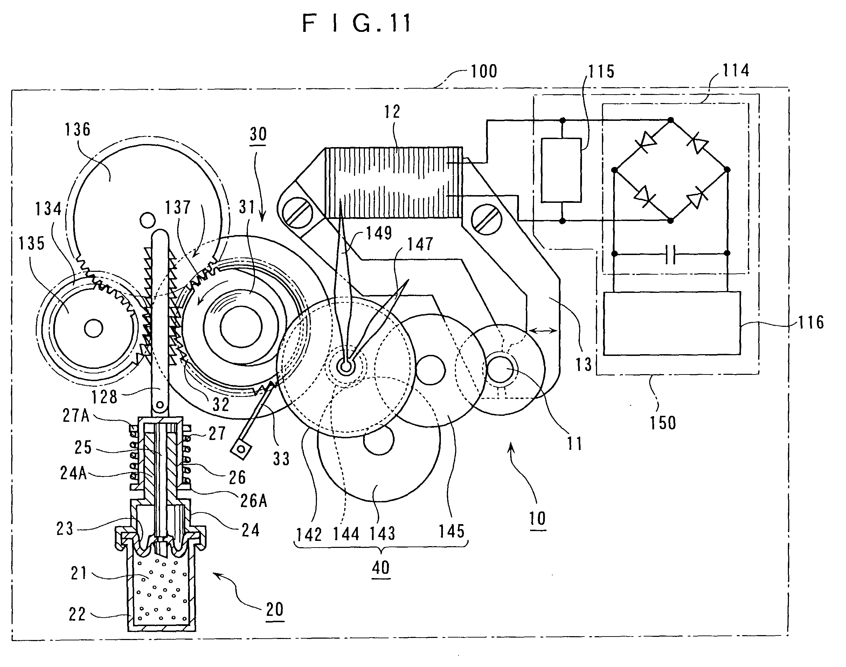

Fig. 11 shows the seventh embodiment of the present invention. In the present embodiment, the temperature difference drive unit 1 as the power supply in the fifth embodiment is substituted by a temperature difference drive unit 100 integrated with a timepiece for measuring the time.

Specifically, the temperature difference drive unit 100 is a clock having a gear train 40 including gear wheels 142 to 145, the gear wheels 142 and 144 being connected with indexes 147 and 148.

The temperature difference drive unit 100 has a drive speed controller 150 for controlling a rotary speed of the power generator 10, more specifically, the rotor 11 of the power generator 10 to a predetermined rotary speed.

A rack 128 having sawtooth teeth on both sides thereof is pivotably provided on an end of the slide 26 provided to the thermoelement 20. The rack 128 advances and retracts in accordance with the advancement and retraction of the rod 25.

On both sides of the rack 128, the ratchet wheel 32 and a gear wheel 134 respectively having sawtooth teeth are provided sandwiching the rack 128. The ratchet wheel 32 is fixed to a barrel center (not shown) of the barrel gear 30 to be directly connected to the main spring 31.

An ordinary gear wheel 135 is integrated coaxially with gear wheel 134. The gear wheel 135 engages with a gear wheel 137 fixed to the barrel center through a gear wheel 136. Accordingly, the gear wheel 134 is indirectly connected with the main spring 31.

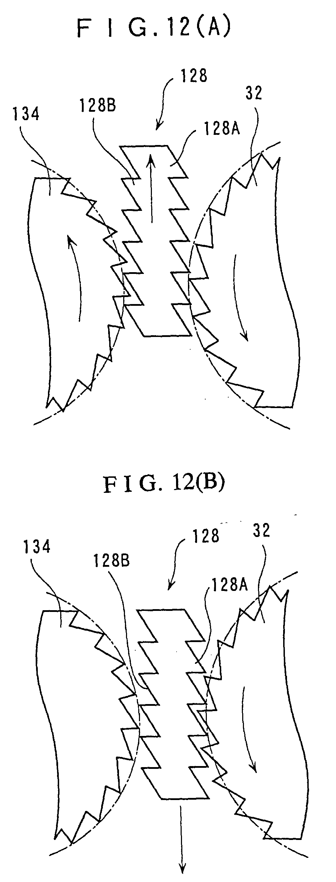

When the rack 128 advances, as shown in Fig. 12(a), a tooth 128A provided on one side is pushed by the tooth of the ratchet wheel 32 so that the other tooth 128B meshes with the tooth of the gear wheel 134. When the rack 128 retracts, as shown in Fig. 12(b), the tooth 128B is pushed by the tooth of the gear wheel 134 so that the tooth 128A meshes with the tooth of the ratchet wheel 32.

When the thermal converter 21 expands to generate a drive force for advancing the rack 128, the drive force rotates the gear wheel 137 through the gear wheel 134, 135 and 136 to wind the main spring 31.

On the other hand, when the thermal converter 21 contracts to generate the drive force for retracting the rack 128, the drive force winds the main spring 31 by directly rotating the ratchet wheel 32. Accordingly, the main spring 31 is wound by both of the expansion and contraction of the thermal converter 21.

Back to Fig. 11, the gear train 40 transfers the rotary drive force of the barrel gear 30 by the second wheel and pinion 142 and a fifth wheel and pinion 145 while increasing speed thereof. A speed-increasing ratio for rotating the rotor 11 of the power generator 10 at a frequency with good power-generating efficiency is set to the gear wheels 142 and 145.

The second wheel and pinion 142 also engages to the third wheel and pinion 143. The third wheel and pinion 143 engages with the sweep second wheel and pinion 144 which is coaxial with the second wheel and pinion 142 and independently rotated by the second wheel and pinion 142. Accordingly, the rotary drive force of the second wheel and pinion 142 is transferred to the sweep second wheel and pinion 144 while increasing speed thereof. The second wheel and pinion 142 has an hour hand position detector 146 (not shown) and an hour hand 147. The sweep second wheel and pinion 144 has a minute hand position detector 148 (not shown) and a minute hand 149.

The hour hand position detector 146 has an angular position detecting scale composed of multiple magnetic thin films on the surface of the sweep second wheel and pinion 144 and a magnet sensor opposing the angular position detecting scale, the angular position detecting scale and the magnet sensor detecting a rotary angular position of the hour hand 147.

The time display includes the hour hand 147, the minute hand 149 and a dial representing numerals showing time (not shown).

The hour hand position detector 146 and the minute hand position detector 148 are position detectors respectively for detecting rotary angular position of the hour hand 147 and the minute hand 149, the position detectors sending the position signal to the drive speed controller 150.

The power generator 10 has a stator 13 formed in an approximate circle having a coil 12 wound at an intermediate portion thereof, and a rotatable rotor 11 composed of a permanent magnet provided in the gap of the stator 13.

The number of revolution of the rotor 11, dimension of the gap between the rotor 11 and the stator 13, the material of the permanent magnet forming the rotor 11, the thickness and coiling number of the winding of the coil 12 are appropriately arranged so that the power generator 10 can efficiently generate electric power.

The drive speed controller 150 has a rectifier 114 composed of diodes and a smoothing capacitor, a rotation adjuster 115 for adjusting the electric current flowing to the coil 12, and a rotation control circuit 116 for outputting an operation signal in accordance with the number of revolution of the rotor 11 of the power generator 10 to the rotation adjuster 115. Incidentally, the rectifier 114 and the rotation adjuster 115 are connected on both ends of the coil 12 of the power generator 10 in parallel. The alternating electric power obtained by the power generator 10 is converted into a direct electric power by the rectifier 114 to be supplied to the rotation control circuit 116.

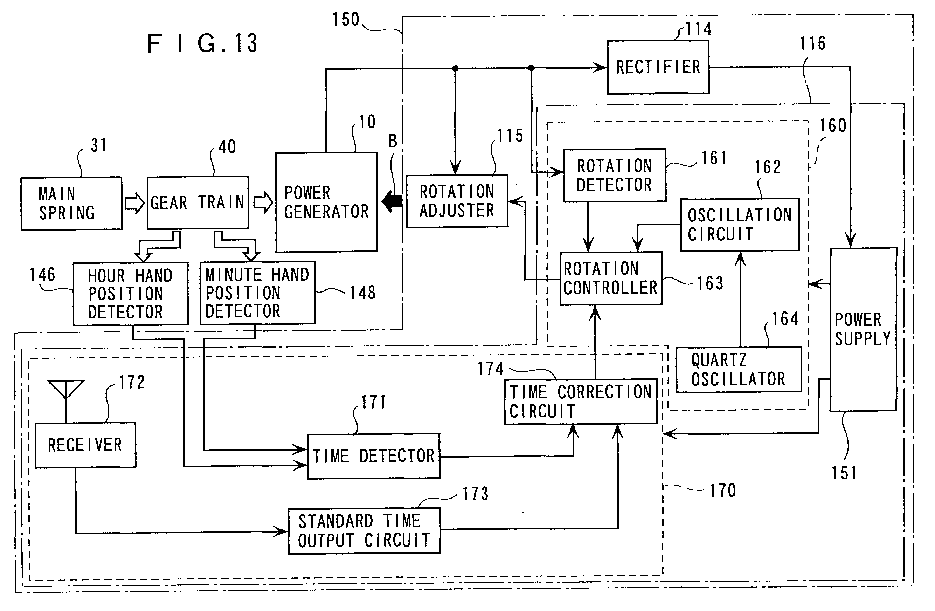

As shown in Fig. 13, the rotation adjuster 116 has a rotation controlling portion 160 for controlling the number of revolution of the rotor 11 of the power generator 10, a time-correcting portion 170 as a time correcting means for correcting the time displayed on the clock, and a power supply 151 for supplying stable electric power to the rotation controlling portion 160 and the time-correcting portion 170.

The rotation controlling portion 160 has a rotation detector 161 for detecting the number of revolution of the rotor 11 of the power generator 10, an oscillating circuit 162 to be oscillated at a reference frequency for controlling the number of revolution of the rotor 11, and a rotation controller 163 for outputting a predetermined operation signal to the rotation adjuster 115 to keep the constant number of revolution of the rotor 11.

The rotation detector 161 detects the number of revolution of the rotor 11 based on the alternating output voltage outputted by the power generator 10 and sends a frequency signal of the rotor 11 to the rotation controlling circuit 163.

The oscillation circuit 161 is always oscillated by the quartz oscillator 164 at a constant frequency and sends a frequency signal to the rotation controller 163 in accordance with the number of revolution of the rotor 11 at which the power generator 10 generates power most efficiently.

The rotation controller 163 compares the rotation signal from the rotation detector 161 and the oscillation circuit 161 to output an operation signal calculated based on the difference therebetween to the rotation adjuster 115.

The operation signal may be, for instance, a rectangular wave voltage signal having repeated alternating High and Low conditions. In order to lower the rotation speed of the rotor 11 of the power generator 10, the proportion of the High condition time relative to the Low condition time, in other words, the duty factor is increased to strengthen a braking force B of the electric magnetic brake. On the other hand, in order to speed up the rotation speed of the rotor 11 or the power generator 10, the duty factor may be reduced, so that the braking force B of the electric magnetic brake is weakened.

The time-correcting portion 170 has a time detector 171 for detecting displayed time of the clock, a receiver 172 for receiving a broadcast wave superposing a time information, a standard time output circuit 173 for acquiring the time information included in the wave received by the receiver 172, and a time correction circuit 174 for outputting a correction signal for correcting the displayed time to the rotation controller 163.

The time detector 171 receives a signal from the hour hand position detector 146 operated together with the hour hand 147 and a signal from the minute hand position detector 148 operated together with the minute hand 149, and sends a displayed time signal indicating the displayed time of the clock based on these signals to the time correction circuit 174.

The receiver 172 demodulates the broadcast wave to remove carrier wave from the broadcast wave, and outputs a broadcast wave of a relatively low frequency to the standard time output circuit 173. Incidentally, the time information is superposed on the broadcast wave outputted by the receiver 172.

The standard time output circuit 173 acquires a standard time signal showing an accurate time from the broadcast signal sent from the receiver 172 to send the standard time signal to the time correction circuit 174.

The time correction circuit 174 compares the display time signal from the time detector 171 and the standard time signal from the standard time signal output circuit 173. When the difference between the signals is larger than a predetermined value, the time correction circuit 174 outputs a deceleration signal or an acceleration signal as a correction signal to the rotation controller 163.

To be more specific, when the time indicated by the display time signal runs faster than the time indicated by the standard time signal; the time correction circuit 174 outputs a deceleration signal to the rotation controller 163.

The rotation controller 163 receiving the deceleration signal increase the duty factor of the operation signal to the rotation adjuster 115 to lower the rotation number of the rotor 11 even when the rotor 11 is rotated at an appropriate rotation number.

The deceleration signal is continuously outputted until the absolute value of the difference between the display time signal and the standard time signal becomes smaller than the predetermined value, so that the time can be corrected when the displayed time runs fast.

On the other hand, when the time indicated by the display time signal runs slower than the time indicated by the standard time signal, the time correction circuit 174 outputs an acceleration signal to the rotation controller 163.

The rotation controller 163 receiving the acceleration signal reduces the duty factor of the operation signal to the rotation adjuster 115 to increase the rotation number of the rotor 11 even when the rotor 11 is rotated at an appropriate rotation number.

The acceleration signal is continuously outputted until the absolute value of the difference between the display time signal and the standard time signal becomes smaller than the predetermined value as in the deceleration signal, so that the time can be corrected when the displayed time runs slow.

The same functions and effects as the fifth embodiment can be obtained in the present embodiment. Further, following effects can be additional obtained.

Since the indexes 147 and 149 are driven by the gear train 40 for transferring the drive energy to the power generator 10 so that the gear train 40 works both as the power transferring means and as the index drive means, a pulse motor etc. for driving the indexes 147 and 149 is not independently provided, thus reducing the size of the whole device 100.

Further, since the gear train 40 having a speed increasing ratio for driving the power generator 10 at a rotation number with superior power-generating efficiency is used and the rotation speed is always kept by the drive speed controller 150, the rotation speed of the power generator 10 can be always kept at a rotation speed capable of efficient power generation and the mechanical energy on account of volume change of the thermal converter 21 can be constantly efficiently converted into electric power even when the volume change of the thermal converter 21 is slow and the torque generated by the main spring 31 differs on account of difference in deformation, so that the size of the power generator 10 can be reduced against the same electric power demand.

Further, since the time-correcting portion 170 for correcting the displayed time is provided to eliminate need for time correction, the clock can function with little maintenance work, which is appropriately set at a place difficult for the maintenance work such as a high clock tower and a street corner with much traffic.

### [Modifications]

Incidentally, a scope of the present invention is not restricted to the above-described embodiments, but includes following modifications.

The time difference drive of the present invention is not restricted to be an independent body, but may be provided as a power supply of a timepiece and light electrical appliance integrated with the timepiece and the light electrical appliance.

For instance, the timepiece in which the temperature difference drive unit of the present invention can be installed as a power supply includes various clocks such as external clock mounted on a clock tower, a wall clock, a table clock and pocket watch, and timer device such as a time recorder, a stopwatch, and a kitchen timer.

The light electrical appliances into which the temperature difference drive unit of the present invention can be installed include a portable light electrical appliance such as cellular phone, PHS, pager, electronic calculator, electronic notebook, PDA (small-sized information terminal, "Personal Digital Assistant"), video camera, toys, IC cards, electronic machine for automobile and housing, small-sized music box, tester and digital multimeter, and a relatively large light electrical appliances such as external illuminating sign, large-sized music box, telemeter device and autographic recorder including a seismometer.

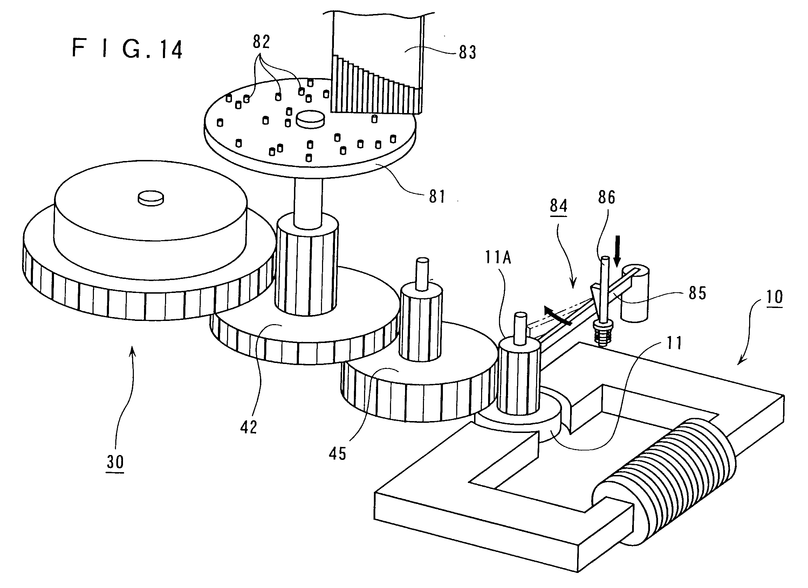

For instance, as shown in Fig. 14, a music box for playing music can be constructed by providing a disk 81 on the shaft of the second wheel and pinion 42, providing multiple pins 82 on the surface of the disk 81 and vibrating comb-shaped fixed scale plate 83 by the pins 82.

A stopper 84 may be provided for starting/stopping the music box.

The stopper 84 may have, for instance, an elastically deformable stop 85 and an operation member 86 for operating the stop 85. A distal end of the stop 85 engages to a pinion 11A of the rotor 11 provided to the power generator 10 to stop the rotation of the rotor 11. The operation member 86 elastically deforms the stop 85 to release the engagement of the distal end of the stop 85 and the pinion 11A of the rotor 11. By handling the operation member 86, the music box can be started/stopped.

Since the above-described portable electric device, timepiece and light electrical appliances are installed with the temperature difference drive unit of the present invention, a dry battery and a secondary battery are not required as a power supply, thus eliminating the need for battery exchange and battery charge, so that environmental pollution caused by disposed dry batteries and secondary batteries can be reduced.

Further, since the power-generation can be manually started in an emergency, preliminary work before generating power, which is required in a power generator having only the oscillating weight and the main spring can be made unnecessary, so that the light electrical appliances can be rapidly actuated in a disaster, an emergency and power failure.

On the other hand, since the above-described non-portable timepieces and light electrical appliances are provided with the temperature difference drive unit of the present invention, no power cord for supplying electric power to the timepiece and the light electrical appliance is necessary, thus eliminating the wiring work for external installation to facilitate installation work.

Further, the externally-installed instruments such as the externally-installed clock, externally-installed illuminating sign, the seismometer and the autographic recorder have the temperature difference drive unit of the present invention and the electric power can be self-supplied, the externally-installed instruments can be easily provided on a remote place difficult to supply the electric power from the outside.

In the present invention, the phase change material is not restricted to the n-paraffin, but may be wax of different type such as micro wax and petrolatum. Or, alternatively, the phase change material is not limited to the wax but may be glycerin. In other words, any material can be used as long as the material has a melting point within an operating temperature range and changes volume thereof by the phase change between solid and liquid.

In the present invention, the thermal converter is not limited to be a mixture of a plurality of phase change material, but may be a simple substance of a single phase change material.

Further, the thermal converter is not limited to a phase change material of which phase changes by temperature change, but may be a form change body such as bimetal and shape memory alloy of which form changes by the temperature change.

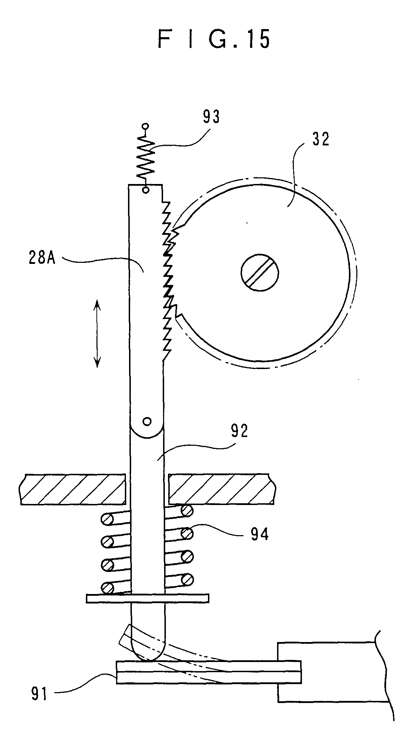

For instance, a mechanical energy convert means using the bimetal as a thermal converter may have a drive rod 92 advanceable relative to an end of a bimetal 91 with a base end thereof being fixed and a rack 28A having sawtooth teeth pivotably provided to an end of the drive rod 92, as shown in Fig. 15.

The tooth of the rack 28A engages with the tooth of the ratchet wheel 32 of the barrel gear 30. A tension spring 93 is connected to an end of the rack 28A for biasing the rack 28A so that the tooth of the rack 28A and the tooth of the ratchet wheel 32 mesh with each other in advancing the drive rod 92.

The tension spring 93 has a biasing force sufficient for allowing inclination of the rack 28A in retracting the drive rod 92. Accordingly, the rack 28A is inclined leftward in the figure in retracting the drive rod 92 so that the mesh between the tooth of the rack 28A and the ratchet wheel 32 can be released.

Accordingly, when the bimetal 91 is deformed on account of temperature change, the drive rod 92 advances against the biasing force of the coil spring 94 to rotate the ratchet wheel 32 to wind the main spring 31 in the barrel gear 30. On the other hand, when the bimetal 91 returns to original form, the rack 28A inclines leftward in the figure without rotating the ratchet wheel 32, so that the mesh between the tooth of the rack 28A and the tooth of the ratchet wheel 32 is released to retract the drive rod 92 to the original position thereof by the biasing force of the coil spring 94.

In the present invention, the elastic body controller maybe omitted. In this case, the main spring should be always constantly coiled, and the elastic body release may be operated as necessary to release the main spring in order to generate electric power. At this time, in order to prevent the damage of the main spring, a frictional engagement portion may preferably be provided to an end engaging with the barrel of the main spring, so that excessive torque is not applied to the completely wound main spring.

A secondary battery may be connected to the output of the power generator to charge the secondary battery.

The elastic body of the mechanical energy accumulator is not limited to the main spring but may be a spring of different shape such as a coil spring, a leaf spring or a torsion spring, or a different elastic material such as rubber.

The mechanical energy accumulator is not limited to those which accumulate the mechanical energy by the elastic deformation of the elastic body, but may be a gravity type, where a height level of an eccentric weight connected at a lower end of a linear member is raised, thereby accumulating the mechanical energy by converting into the position energy of the eccentric weight.

## Claims

1. A temperature difference drive unit, comprising:
a power generator driven by a mechanical energy to generate an electric power; and
a mechanical energy generator for generating the mechanical energy supplied to the power generator, the mechanical energy generator having a thermal converter including a phase change material whose phase changes from one of solid and liquid to the other to change a volume thereof.

2. The temperature difference drive unit according to Claim 1, wherein the thermal converter is a mixture of a plurality of the phase change materials whose temperature for causing phase change differ, a mixture ratio of the phase change materials being adjusted so that operating characteristics in accordance with using environment can be obtained.

3. The temperature difference drive unit according to Claim 1 or 2, wherein an additive for adjusting a phase change temperature and/or temperature characteristics of the phase change material is mixed in the thermal converter.

4. The temperature difference drive unit according to any one of Claims 1 to 3, wherein the phase change material is wax.

5. The temperature difference drive unit according to any one of Claims 1 to 4, wherein the mechanical energy generator has a case containing the thermal converter thereinside, the container having an advanceable and retractable drive member driven by a volume change of the thermal converter.

6. The temperature difference drive unit according to any one of Claims 1 to 5, wherein, in order to transfer the mechanical energy to the power generator, a gear train combining a plurality of gear wheels to transfer a drive force by the mechanical energy is provided.

7. The temperature difference drive unit according to Claim 6, wherein the gear train is set at a speed increasing ratio for driving the power generator at a number of revolution with a good power-generating efficiency.

8. The temperature difference drive unit according to any one of Claims 1 to 7, further comprising a mechanical energy accumulator for accumulating the mechanical energy generated by the mechanical energy generator.

9. The temperature difference drive unit according to any one of Claims 1 to 8, wherein the electric power generated by the power generator is supplied to the outside, the temperature difference drive unit being a power-generating unit.

10. The temperature difference drive unit according to Claim 9, further comprising:
an elastic body as a mechanical energy accumulator for accumulating the mechanical energy generated by the mechanical energy generator, the elastic body being elastically deformed by a volume change of the thermal converter of the mechanical energy generator; and
an elastic body controller for keeping a displacement of the elastic body caused by the mechanical energy generator until the displacement of the elastic body reaches a predetermined value, and for releasing the displacement of the elastic body when the displacement of the elastic body exceeds the predetermined value.

11. The temperature difference drive unit according to Claim 9 or 10, further comprising:
an elastic body as a mechanical energy accumulator for accumulating the mechanical energy generated by the mechanical energy generator, the elastic body being elastically deformed by a volume change of the thermal converter of the mechanical energy generator; and
an elastic body release for keeping a displacement of the elastic body caused by the mechanical energy generator, and for manually releasing the displacement of the elastic body.

12. A temperature difference drive unit, comprising:
a mechanical energy converter for converting a thermal energy obtained by change in ambient temperature into a mechanical energy;
a mechanical energy accumulator for accumulating the mechanical energy outputted by the mechanical energy converter;
a rotor rotated by the mechanical energy;
a power generator for generating an electric power by a rotary drive of the rotor;
a transfer unit for transferring a drive force by the mechanical energy to the power generator; and
a controller operated by the electric power from the power generator, the controller controlling a number of revolution of the rotor of the power generator to a predetermined number of revolution.

13. The temperature difference drive unit according to Claim 12, the mechanical energy accumulator comprising an elastic body elastically deformed by the mechanical energy.

14. The temperature difference drive unit according to Claim 12 or 13, wherein the number of revolution is controlled to the predetermined number of revolution by adjusting an electric current flowing to the controller to brake the rotor by an electric magnetic brake.

15. The temperature difference drive unit according to Claim 14, wherein the transfer unit is a gear train combining a plurality of gear wheels, at least one of the gear wheel of the gear train being provided with an index for indicating time.

16. The temperature difference drive unit according to Claim 15, wherein the index represents time,
wherein the gear wheel provided with the index has a position detector for detecting rotation angular position thereof, and
wherein a time corrector for receiving a standard time wave superposing a time information and for correcting the rotation angular position of the index to correct the time represented by the index is provided.

17. An electric device, comprising:
a mechanical energy converter for converting a thermal energy obtained by change in ambient temperature into a mechanical energy;
a mechanical energy accumulator for accumulating the mechanical energy outputted by the mechanical energy converter;
a rotor rotated by the mechanical energy;
a power generator for generating an electric power by a rotary drive of the rotor;
a transfer unit for transferring a drive force by the mechanical energy to the power generator;
a controller operated by the electric power from the power generator, the controller controlling a number of revolution of the rotor of the power generator to a predetermined number of revolution; and
a time display rotatably driven by the mechanical energy together with the power generator, a number of revolution of the controller being adjusted by the controller.

18. A timepiece, comprising:
a mechanical energy generator for generating a mechanical energy by a change in ambient temperature, the mechanical energy generator having a thermal converter including a phase change material whose phase changes from one of solid and liquid to the other to change a volume thereof; and
a power generator driven by the mechanical energy generated by the mechanical energy generator to generate an electric power, the timepiece being driven by the electric power generated by the power generator.

19. A light electrical appliance, comprising:
a mechanical energy generator for generating a mechanical energy by a change in ambient temperature, the mechanical energy generator having a thermal converter including a phase change material whose phase changes from one of solid and liquid to the other to change a volume thereof; and
a power generator driven by the mechanical energy generated by the mechanical energy generator to generate an electric power, the light electrical appliance being driven by the electric power generated by the power generator.
